# FASCICULE DE BREVET EUROPEEN

(11) **EP 4 381 940 B1**
(45) Date de publication et mention de la délivrance du brevet: **23.07.2025**
(21) Numéro de dépôt: 23213741.4
(22) Date de dépôt: 01.12.2023
(51) Int. Cl.: A01K 1/01

(54) **INSTALLATION D'ÉLEVAGE D'ANIMAUX ET DISPOSITIF DE NETTOYAGE D'UN SOL D'UNE TELLE INSTALLATION**
TIERZUCHTANLAGE UND VORRICHTUNG ZUM REINIGEN EINES BODENS EINER SOLCHEN ANLAGE
ANIMAL BREEDING FACILITY AND DEVICE FOR CLEANING A FLOOR OF SUCH A FACILITY

(30) Priorité: 06.12.2022 FR 2212856
(43) Date de publication de la demande: 12.06.2024
(73) Titulaire: Ets M.T.E, 44290 Guemene-Penfao (FR)
(72) Inventeur: BARRAT, SEBASTIEN, 44290 GUEMENE PENFAO (FR)
(74) Mandataire: Lequien, Philippe

(56) Documents cités:
- CN-U- 210 959 843
- DE-A1- 102004 016 720

## Description

Le domaine de l'invention est celui de la conception et de la fabrication des équipements pour les installations d'élevage d'animaux.

Plus précisément, l'invention concerne une installation d'élevage animale et un dispositif de nettoyage d'un sol d'une telle installation.

L'élevage des bovins, notamment des bovins destinés à la production laitière, est réalisée dans des installations d'élevage présentant une pluralité de parcelles destinées à recevoir lesdits bovins.

Les parcelles, qui peuvent être fermées ou ouvertes, sont positionnées en rangées séparées les unes des autres par des allées permettant l'accès des bovins aux parcelles.

Outre l'accès aux parcelles, ces allées permettent la récolte du lisier, c'est à dire des déjections des bovins, ce lisier étant alors raclé pour être entrainé dans une fosse de récolte.

Classiquement, les exploitants des installations utilisent des racleurs qui sont déplacés le long des allées par des moyens d'entraînement.

D'une manière générale, les racleurs comprennent deux racles positionnées de part et d'autre d'un corps central sur lequel sont accrochés les moyens d'entraînement.

Le corps est donc positionné au centre du racleur et les racles s'étendent soit dans le prolongement l'une de l'autre, soit en vis-à-vis l'une de l'autre de sorte à former un entonnoir qui dirige le lisier vers le corps.

Les moyens d'entraînement comprennent deux chaînes accrochées de part et d'autre du corps selon une direction générale de déplacement du racleur, une première chaîne s'étendant dans le sens de la marche en avant, et une deuxième chaîne s'étendant dans le sens de la marche arrière.

Les chaînes sont reliées à au moins un enrouleur qui permet de tracter le racleur soit en marche avant selon un premier sens d'enroulement, soit en marche arrière selon un deuxième sens d'enroulement.

Les racles sont montées mobiles sur le corps.

Ainsi, lorsque le racleur est déplacé en marche avant, les racles sont écartées l'une de l'autre de sorte à s'étendre en travers de l'allée afin de racler le lisier qui s'y trouve.

En revanche, lorsque le racleur est déplacé en marche arrière, les racles sont rabattues sur le corps de sorte à ne pas racler l'allée.

Les racleurs présentent également une hauteur limitée de sorte à pouvoir être enjambés par les bovins.

En effet, afin de ne pas nuire à la productivité, les racleurs sont mis en services alors même que les bovins peuvent évoluer dans l'installation.

La hauteur des racleurs et leur vitesse de déplacement ont donc été choisis pour que les bovins puissent les enjamber sans difficultés et qu'ils ne risquent pas d'être fauchés lors du passage du racleur.

Par ailleurs, afin de faciliter l'adhérence des pattes des bovins sur les allées, le sol des allées est pourvu d'aspérité qui évitent que le lisier ne forme une pellicule glissante à la surface du sol.

Lorsque le racleur racle le sol des allées, il entraîne une partie du lisier qui se trouve à la surface mais tasse une partie du lisier dans les aspérités du sol.

Or, le lisier restant piégé dans les aspérités du sol fermente et entraine des maladies de pates des bovins qui utilisent ces allées pour se rendre dans une parcelle.

Cela nuit alors à la productivité de l'installation puisque les bovins malades ont du mal à se déplacer pour aller à la traite et se nourrir, ce qui diminue d'une part la qualité du lait obtenu, mais également la quantité de lait en fin de traite.

En outre, cela oblige les éleveurs à avoir recours aux services des vétérinaires afin de soigner les bovins malades, ce qui représente un coût non négligeable et diminue les bénéfices de l'installation.

Pour limiter les risques de maladie des bovins, des racleurs spécifiques ont été développés.

A titre d'exemple, le document de brevet publié sous le numéro CN 210 959 843 décrit un racleur comprenant une première rangée de racles et une deuxième rangée de racles parallèle à la première rangée. Entre les deux rangées de racles, le racleur comprend un dispositif de brossage incluant une pluralité de brosses rotatives destinées à brosser le sol durant le déplacement du racleur.

Le dispositif de brossage permet alors de déloger le lisier des aspérités, le lisier délogé des aspérités étant destiné à être raclé par les racles.

Toutefois, un tel dispositif n'est pas sans inconvénients.

En effet, bien que les brosses délogent le lisier des aspérités du sol après le passage de la première rangée de racles, la deuxième rangée de racles ne racle qu'une partie du lisier, l'autre partie retombant dans les aspérités.

Dès lors, le nettoyage du sol, s'il est amélioré grâce à la présence des brosses, ne permet pas de limiter de manière satisfaisante les risques de maladie pour les bovins.

Une autre solution envisagée consiste à évacuer les allées temporairement pour passer un aspirateur à brosses. Cependant, cette solution nuit grandement à la productivité et représente un coût important pour les éleveurs.

L'invention a notamment pour objectif de pallier les inconvénients de l'art antérieur.

Plus précisément, l'invention a pour objectif de proposer une solution permettant de limiter les risques de maladie de patte des bovins sans gêner à la productivité de l'installation.

L'invention a également pour objectif de fournir une telle solution qui soit peu énergivore.

L'invention a en outre pour objectif de fournir une telle solution qui soit simple de fabrication et de maintenance.

Ces objectifs, ainsi que d'autres qui apparaîtront par la suite, sont atteints grâce à l'invention qui a pour objet un racleur à lisier pour installation d'élevage d'animaux, selon la revendication 1.

Grâce au dispositif de brossage et aux moyens de renvoi du racleur, le lisier restant logé dans les aspérités du sol se trouve délogé pour être renvoyé en amont des racles.

Cela permet d'obtenir un sol dépourvu de lisier, ou quasiment, ce qui limite les risques d'infection des animaux.

Les deux brosses permettent de déloger le lisier piégé dans les aspérités du sol après le passage des racles.

Selon un autre aspect avantageux, chaque brosse est hélicoïdale et configurée pour diriger le lisier raclé sur un sol en direction du corps, les moyens de renvoi étant configurés pour récupérer le lisier raclé par chaque brosse et le renvoyer en amont des racles selon le sens d'avancement en marche avant du racleur.

Une telle architecture permet un renvoi du lisier en amont du racleur de manière mécanique sans recours à un système d'aspiration par exemple.

Cela bénéficie alors à la compacité du racleur qui peut alors être aisément enjambé par les animaux situés traversant l'allée.

Selon un autre aspect avantageux, les moyens de renvoi se présentent sous la forme de déflecteurs entourant chacune des brosses, les brosses étant configurées pour envoyer le lisier raclé sur le sol en direction des déflecteurs.

Une telle architecture rend encore plus compact le racleur.

Par ailleurs, cette architecture permet de limiter la consommation énergétique du racleur, et donc de l'installation.

Selon un autre aspect avantageux, le racleur comprend également des moyens de désinfection positionnés en aval des moyens de brossage selon le sens d'avancement en marche avant du racleur.

Les moyens de désinfection permettent d'assurer l'assainissement du sol après le passage du racleur.

En d'autres termes, même s'il reste une fine pellicule de lisier (notamment une pellicule d'eau) le dispositif de désinfection permet de rendre inoffensive cette pellicule pour les animaux.

Selon un autre aspect avantageux, les moyens de désinfection comprennent une rampe d'aspersion d'une solution désinfectante et/ou une rampe de lampes à ultraviolets.

L'utilisation d'une solution désinfectante ou d'un rayonnement ultra-violet permet d'assainir le sol sans risques pour les animaux situés à proximité du racleur.

Par ailleurs, de telles solutions présentent un encombrement réduit qui bénéficie au confort des animaux qui ne doivent pas enjamber un racleur trop imposant.

L'invention concerne également une installation d'élevage d'animaux, selon la revendication 7.

Une telle installation permet de protéger les animaux, par exemple les bovins, contre les maladies de pattes liées à la présence de lisier dans les allées.

En effet, grâce au dispositif de brossage et aux moyens de renvoi du racleur, le lisier restant logé dans les aspérités du sol se trouve délogé pour être renvoyé en amont des racles.

Cela permet d'obtenir un sol dépourvu de lisier, ou quasiment, ce qui limite les risques d'infection des animaux.

Selon un aspect avantageux, le racleur comprend également des moyens de désinfection positionnés en aval des moyens de brossage selon le sens d'avancement en marche avant du racleur.

Les moyens de désinfection permettent d'assurer l'assainissement du sol après le passage du racleur.

En d'autres termes, même s'il reste une fine pellicule de lisier (notamment une pellicule d'eau) le dispositif de désinfection permet de rendre inoffensive cette pellicule pour les animaux.

Selon un autre aspect avantageux, l'installation comprend des moyens d'entraînement en déplacement du racleur, les moyens d'entraînement comprenant un dispositif motorisé et un organe de liaison reliant le dispositif motorisé au racleur.

De tels moyens d'entraînement peuvent être distants de l'allée pour ne pas former de gêne au passage des animaux dans l'allée.

Selon un autre aspect avantageux, le dispositif de brossage comprend deux brosses positionnées chacune en aval d'une racle selon le sens d'avancement en marche avant du racleur, chaque brosse étant hélicoïdale et configurée pour diriger le lisier raclé sur un sol en direction du corps, les moyens de renvoi étant configurés pour récupérer le lisier raclé par chaque brosse et le renvoyer en amont des racles selon le sens d'avancement en marche avant du racleur.

Une telle architecture permet un renvoi du lisier en amont du racleur de manière mécanique sans recours à un système d'aspiration par exemple.

Cela bénéficie alors à la compacité du racleur qui peut alors être aisément enjambé par les animaux situés traversant l'allée.

Selon un autre aspect avantageux, les moyens de renvoi se présentent sous la forme de déflecteurs entourant chacune des brosses, les brosses étant configurées pour envoyer le lisier raclé sur le sol en direction des déflecteurs.

Une telle architecture rend encore plus compact le racleur.

Par ailleurs, cette architecture permet de limiter la consommation énergétique du racleur, et donc de l'installation.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrites ci-après.
- La figure 1 est une représentation schématique en perspective de dessus d'une installation d'élevage d'animaux, selon l'invention.
- La figure 2 est une représentation schématique en perspective de dessus d'un racleur à lisier de l'installation d'élevage d'animaux, selon l'invention.
- La figure 3 est une représentation schématique d'un détail du racleur de la figure 2, selon un premier mode de réalisation.
- La figure 4 est une représentation schématique en coupe transversale, selon le plan de coupe IV-IV de la figure 2, illustrant un deuxième mode de réalisation du racleur de la figure 2.
- La figure 5 est une représentation schématique d'une variante d'un détail du racleur de la figure 2, selon le premier mode de réalisation.
- La figure 6 est une représentation schématique en coupe transversale, selon le plan de coupe IV-IV de la figure 2, illustrant une variante du deuxième mode de réalisation du racleur de la figure 2.

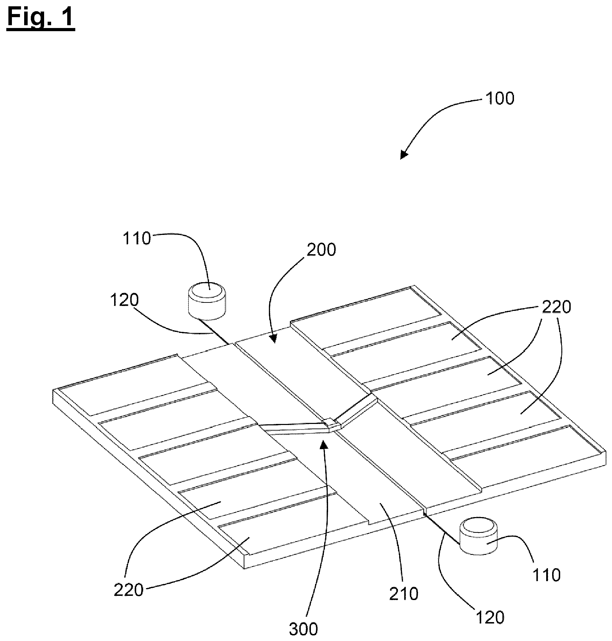

La figure 1 illustre une installation 100 d'élevage d'animaux, selon l'invention.

Plus spécifiquement, l'installation 100 illustrée sur la figure 1 est une installation d'élevage bovin, notamment pour la production de lait.

L'installation 100 présente au moins une allée 200 présentant un sol 210 sur lequel les animaux, en l'espèce les bovins, peuvent se déplacer.

Pour limiter les risques de glissade des bovins, le sol 210 présente des aspérités qui rendent le sol 210 rugueux et non lisse.

De part et d'autre de l'allée 200, des parcelles 220 sont disposées, par exemple pour permettre aux bovins de se reposer entre deux traites.

Les parcelles 220 peuvent être équipées de matelas à eau permettant à la fois de rafraichir les bovins et de récupérer la chaleur qu'ils dégagent pour assurer en partie ou en totalité le chauffage de l'installation 100.

Durant leur séjour dans l'installation 100, les bovins se nourrissent et produisent des déjections. Ces déjections forment alors du lisier.

Le lisier se retrouve alors sur le sol 210 de l'allée 200.

Pour limiter les risques d'infection des bovins, notamment éviter les maladies de pattes liées à la présence sur le sol 210 des déjections, l'installation 100 comprend un racleur 300 à lisier.

Le racleur 300 est destiné à parcourir l'allée 200 pour racler le lisier se trouvant sur le sol 210 et le repousser vers une fosse (non représentée) destinée à recueillir le lisier de l'installation 100.

Cette fosse est notamment située à une extrémité de l'allée 200.

Tel qu'illustré par la figure 1, le racleur 300 est déplacé dans l'allée 200 par des moyens d'entraînement.

Les moyens d'entraînement comprennent un dispositif motorisé et un organe de liaison reliant le dispositif motorisé au racleur 300.

Le dispositif motorisé comprend deux enrouleurs 120 positionnés chacun à une extrémité de l'allée 200, et deux chaînes 120 reliées chacune à l'un des enrouleurs 110 et au racleur 300.

Pour faire avancer ou reculer le racleur 300, il suffit alors d'utiliser l'un des enrouleurs 110 qui tracte alors le racleur 300 via la chaîne 120 qui lui est associée.

En variante, le dispositif motorisé comprend un unique enrouleur 110 et l'organe de liaison comprend une unique chaîne 120 dont les extrémités sont reliées chacune à une face avant et une face arrière du corps du racleur 300, selon le sens d'avancement en marche avant. La chaîne 120 forme alors une boucle mue par l'unique enrouleur 110, des poulies de renvoi étant alors positionnées dans l'installation 100 pour maintenir la chaîne 120 sous forme de boucle. Pour faire avancer ou reculer le racleur 300, il suffit alors de faire tourner l'enrouleur 110 dans un sens ou dans l'autre.

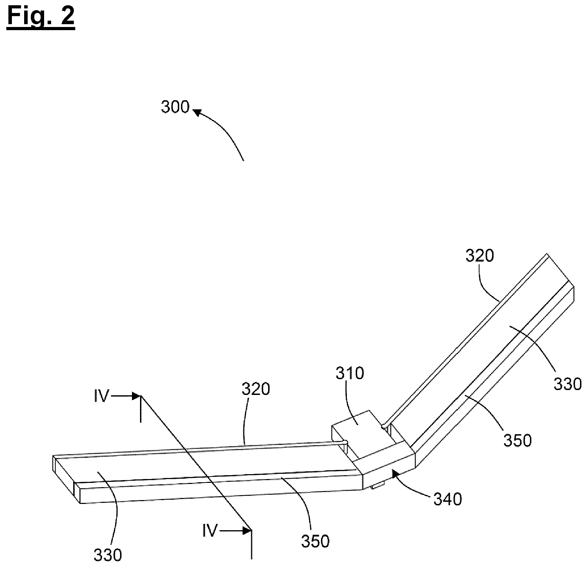

En référence à la figure 2, le racleur 300 comprend :
- un corps 310 ;
- une paire de racles 320 s'étendant de part et d'autre du corps 310 ;
- un dispositif de brossage 330 du sol 210.

Plus particulièrement, la paire de racles 320 s'étend de part et d'autre du corps 310 transversalement à un sens d'avancement en marche avant du racleur 300.

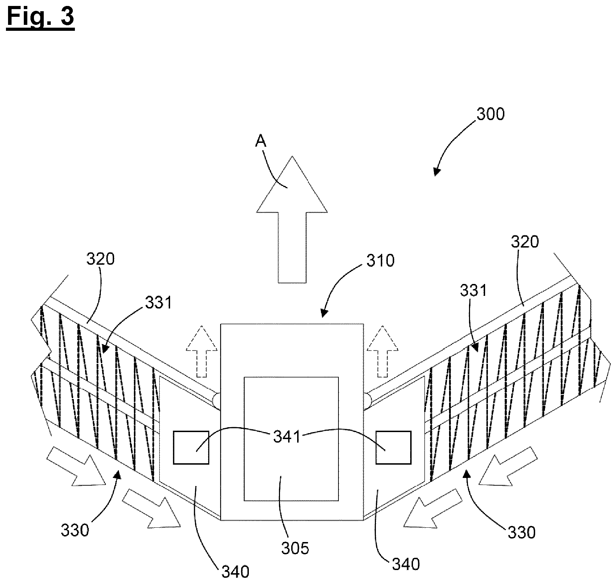

Le sens d'avancement en marche avant est notamment illustré par la flèche A des figures 3,4 et 6.

Pour permettre le fonctionnement du dispositif de brossage 330 qui sera décrit plus en détail ci-après, le racleur 300 intègre une batterie 305. La batterie 305 est notamment logée dans le corps 310 du racleur 305.

Les racles 320 sont montées à rotation sur le corps 310 du racleur 300, et peuvent adopter une position de raclage dans laquelle elles s'étendent transversalement à l'allée 200 (comme illustré par la figure 1), et une position de rangement dans laquelle elles s'étendent sensiblement longitudinalement à l'allée 200 et ne permettent pas, ou quasiment pas, de racler le sol 210.

En fonctionnement, le racleur 300 racle le sol 210 pour diriger le lisier qui s'y trouve vers la fosse à lisier située en bout de l'allée 200 selon le sens d'avancement en marche avant.

En référence aux figures 2 et 3, le dispositif de brossage 330 est positionné en aval des racles 320 selon le sens d'avancement en marche avant du racleur.

Le dispositif de brossage 330 est destiné à brosser le sol 210 pour extraire des aspérités le lisier qui s'y accumule.

Tel qu'illustré par les figures 2 à 4, le racleur 300 comprend également des moyens de renvoi 340 du lisier délogé des aspérités du sol 210 par le dispositif de brossage 320.

Les moyens de renvoi 340 sont configurés pour renvoyer le lisier raclé par le dispositif de brossage 330 en amont des racles 320 selon le sens d'avancement en marche avant du racleur 300.

En référence à la figure 2, le racleur 300 comprend également des moyens de désinfection 350 positionnés en aval des moyens de brossage 330 selon le sens d'avancement en marche avant du racleur 300.

Les moyens de désinfection 350 peuvent par exemple comprendre une rampe d'aspersion d'une solution désinfectante et/ou une rampe de lampes à ultra-violet.

Les moyens de désinfection 350 permettent d'assainir le sol 210 une fois que le racleur 300 est passé, et que le dispositif de brossage 330 a délogé le lisier situé dans les aspérités du sol 210.

Cela permet d'assainir plus encore le sol 210 afin d'éviter les maladies de pattes pour les bovins.

Tel qu'illustré par la figure 3, le dispositif de brossage 330 comprend deux brosses 331 positionnées chacune en aval d'une racle 310 selon le sens d'avancement en marche avant du racleur 300.

Selon un premier mode de réalisation illustré par la figure 3, chaque brosse 331 est hélicoïdale et configurée pour diriger le lisier délogé des aspérités du sol 210 en direction du corps 310 du racleur 300.

Les moyens de renvoi 340 sont alors configurés pour récupérer le lisier raclé par chaque brosse 331 et le renvoyer en amont des racles 320 selon le sens d'avancement en marche avant du racleur 300.

Plus spécifiquement, les moyens de renvoi 340 sont positionnés en bout des brosses 331, à proximité du corps 310, selon le sens d'avancement en marche avant du racleur 300, et forment une jonction entre les deux brosses 331 du dispositif de brossage 330.

Selon ce premier mode de réalisation, chaque brosse 331 est associée à des moyens de renvoi 340 distincts. Chacun des moyens de renvoi 340 est positionné en bout de l'une des brosses 331.

Selon ce premier mode de réalisation, les moyens de renvoi 340 comprennent un rouleau 341 destiné à recueillir le lisier en provenance de chaque brosse 331 qui, par sa vitesse de rotation, l'éjecte en amont des racles 320. L'éjection du lisier en amont des racles 320 est donc réalisée par la vitesse de rotation du rouleau 341 de chacun des moyens de renvoi 340.

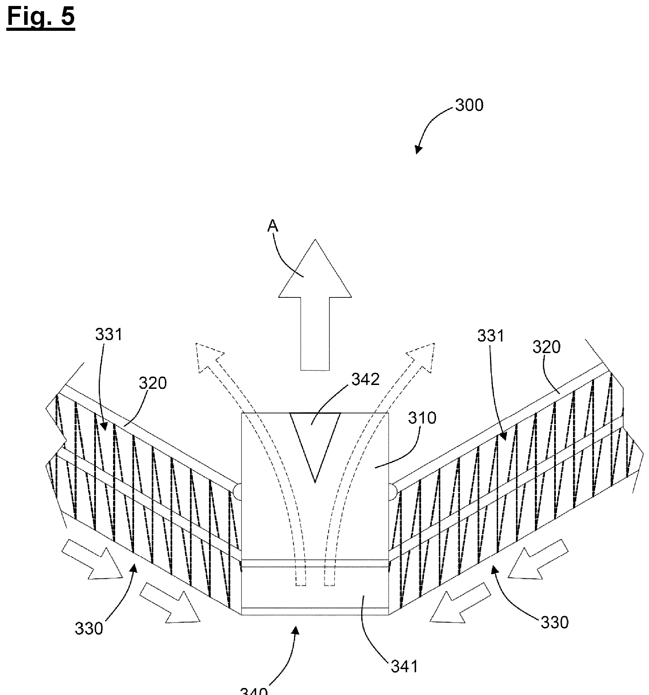

Selon une variante de réalisation illustrée par la figure 5, les moyens de renvoi 340 sont positionnés en aval du corps 310, selon le sens d'avancement en marche avant du racleur 300. Les moyens de renvoi 340 comprennent un rouleau 341 destiné à recueillir le lisier en provenance de chacune des brosses 331, le rouleau 341, par sa vitesse de rotation, éjectant le lisier en amont des racles 320. L'éjection du lisier en amont des racles 320, et donc du corps 310, est donc réalisée par la vitesse de rotation du rouleau 341 de chacun des moyens de renvoi 340.

Selon cette variante, les moyens de renvoi 340 peuvent également comprendre un organe de guidage 342 du lisier depuis le rouleau 341 pour le diriger en amont des racles 320, c'est-à-dire sur les côtés du corps 310.

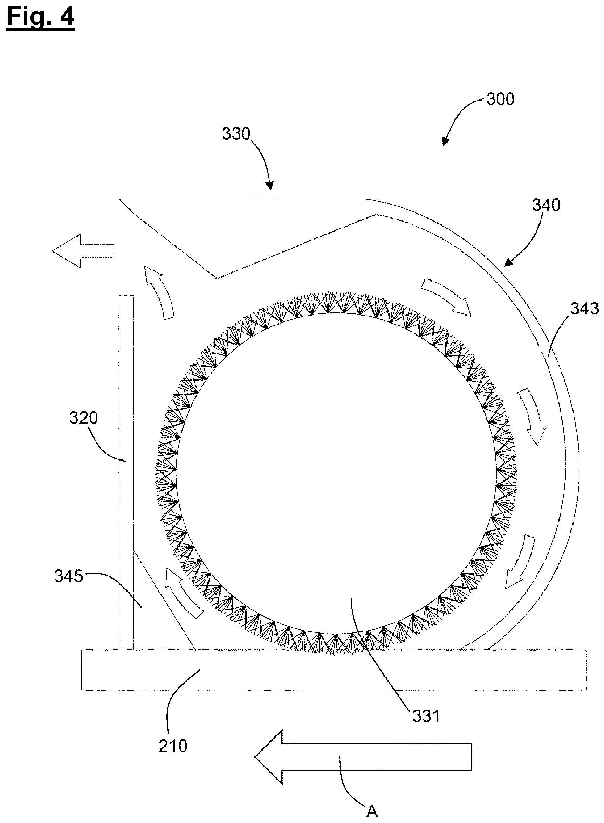

Selon un deuxième mode de réalisation illustré par la figure 4, les moyens de renvoi 340 se présentent sous la forme de déflecteurs 343 entourant chacune des brosses 331.

Les brosses 331 sont ainsi configurées pour envoyer le lisier délogé des aspérités du sol 210 en direction des déflecteurs 343, qui redirigent alors le lisier en amont des racles 320.

Les déflecteurs 343 peuvent par exemple comprendre un revêtement antiadhésif permettant que le lisier brossé et envoyé par les brosses 331 n'adhère pas aux déflecteurs 343 mais glisse sur ces derniers afin d'être envoyé en amont des racles 320.

Plus précisément, comme illustré par la figure4, les brosses 331 tournent dans un sens horaire selon le sens d'avancement en marche avant du racleur 33. Le lisier brossé est donc dirigé vers les racles 320.

Les racles 320 portent alors un tremplin 345 faisant face aux brosses 331. Le tremplin 345 permet de dévier le lisier brossé vers les déflecteurs 343 afin qu'il soit renvoyé en amont des racles 320 par rebond sur els déflecteurs 343.

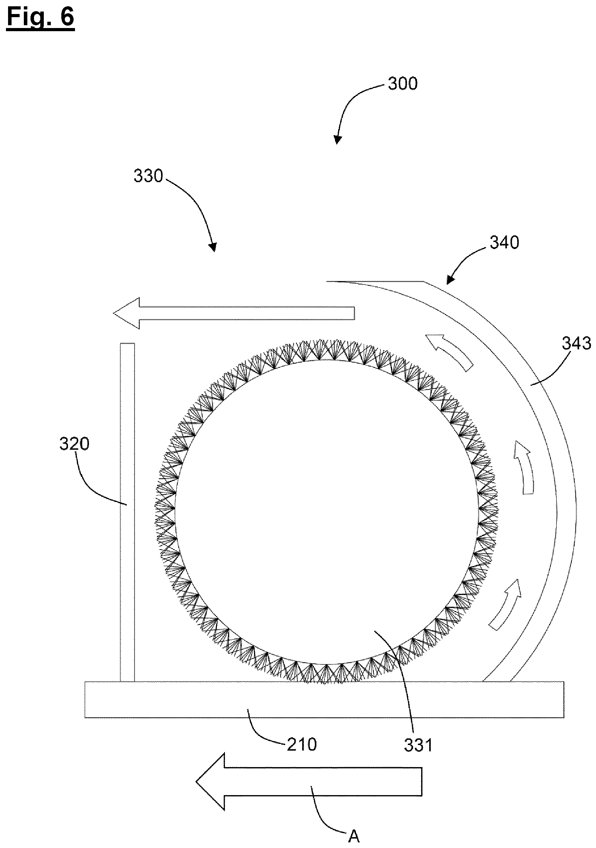

Selon une variante illustrée par la figure 6, les brosses 331 tournent dans un sens antihoraire, selon le sens d'avancement en marche avant du racleur 33. Le lisier brossé est donc envoyé ers les déflecteurs 343 et glisse sur ces derniers jusqu'à être éjecté en amont des racles 320.

En fonctionnement, les racles 320 sont positionnées dans leur position de raclage de sorte que le racleur 300 puisse, via les racles 320, récupérer le lisier présent sur le sol 210 pour le diriger vers la fosse à lisier.

Lorsque les racles passent sur le sol 210, une partie du lisier contenu sur ou dans les aspérités du sol 210 n'est pas capté par les racles 320 et reste ainsi bloqué dans les aspérités.

Le dispositif de brossage 330 situé en aval des racles 320 permet alors de déloger le lisier situé dans les aspérités pour l'envoyer vers les moyens de renvoi 340 qui le renvoient alors en amont des racles 320.

Ainsi, tout du long du passage en marche avant du racleur 300, le lisier, même celui situé dans les aspérités, est envoyé ou repoussé en amont du racleur 300 pour être dirigé vers la fosse.

Une fois que le racleur 300 est passé, seule une quantité très faible de lisier peut rester sur le sol.

Cette quantité reste toutefois insuffisante pour engendrer des maladies de pattes aux bovins qui pourraient nuire à la productivité de l'installation 100.

En outre, lorsque le racleur est équipé des moyens de désinfection 350, la partie du lisier restante dans les aspérités du sol 210 se trouve supprimée par les moyens de désinfection 350 rendant alors le sol sain pour que les bovins puissent l'emprunter sans risque de contracter une maladie de pattes.

## Revendications

1. Racleur (300) à lisier pour installation (100) d'élevage d'animaux, le racleur (300) comprenant :
- un corps (310),
- une paire de racles (320) s'étendant de part et d'autre du corps (310), transversalement à un sens d'avancement en marche avant du racleur (300),
- un dispositif de brossage (330) du sol (210), positionné en aval des racles (320) selon le sens d'avancement en marche avant du racleur (300), le dispositif de brossage (300) comprenant deux brosses (331) positionnées chacune en aval d'une racle (320) selon le sens d'avancement en marche avant du racleur (300), les brosses étant configurées pour déloger le lisier piégé dans des aspérités du sol après le passage des racles ;
**caractérisé en ce que**
le racleur (300) comprend également des moyens de renvoi (340) du lisier raclé par le dispositif de brossage (330), conçus pour renvoyer le lisier en amont des racles (320) selon le sens d'avancement en marche avant du racleur (300).

2. Racleur (300) selon la revendication 1, **caractérisé en ce que** chaque brosse (331) est hélicoïdale et configurée pour diriger le lisier délogé des aspérités du sol (210) en direction du corps (310), les moyens de renvoi (340) étant configurés pour récupérer le lisier raclé par chaque brosse (331) et le renvoyer en amont des racles (320) selon le sens d'avancement en marche avant du racleur (300).

3. Racleur (300) selon la revendication précédente, **caractérisé en ce que** les moyens de renvoi (340) comprennent un rouleau (341) destiné à recueillir le lisier en provenance de chaque brosse (331), le rouleau étant configuré pour éjecter le lisier recueilli en amont des racles (320) par sa vitesse de rotation.

4. Racleur (300) selon l'une quelconque des revendications 1 et 2, **caractérisé en ce que** les moyens de renvoi (340) se présentent sous la forme de déflecteurs (343) entourant chacune des brosses (331), les brosses (331) étant configurées pour envoyer le lisier raclé sur le sol en direction des déflecteurs (343).

5. Racleur (300) selon l'une quelconque des revendications 1 à 4, **caractérisé en ce qu'**il comprend également des moyens de désinfection (350) positionnés en aval des moyens de brossage (330) selon le sens d'avancement en marche avant du racleur (300).

6. Racleur selon la revendication précédente, **caractérisé en ce que** les moyens de désinfection comprennent une rampe d'aspersion d'une solution désinfectante et/ou une rampe de lampes à ultraviolets.

7. Installation (100) d'élevage d'animaux comprenant au moins une allée (200) destinée à être traversée par les animaux, ladite allée présentant un sol (210) pourvu d'aspérités, l'installation (100) comprenant également au moins un racleur (300) à lisier selon l'une quelconque des revendications précédentes, destiné à racler le sol (210) de l'allée (200).

8. Installation (100) selon la revendication précédente, **caractérisée en ce qu'**elle comprend des moyens d'entraînement en déplacement du racleur (300), les moyens d'entraînement comprenant un dispositif motorisé et un organe de liaison reliant le dispositif motorisé au racleur (300).

## Patentansprüche

1. Gülleabstreifer (300) für eine Tierzuchtanlage (100), wobei der Abstreifer (300) Folgendes umfasst:
- einen Körper (310),
- ein Paar Rakeln (320), das sich auf beiden Seiten des Körpers (310) quer zu einer Vorwärtsbewegungsrichtung des Abstreifers (300) erstreckt,
- eine Bürstenvorrichtung (330) für den Boden (210), die nach den Rakeln (320) in der Vorwärtsbewegungsrichtung des Abstreifers (300) positioniert ist, wobei die Bürstenvorrichtung (300) zwei Bürsten (331) umfasst, die jeweils nach einer Rakel (320) in der Vorwärtsbewegungsrichtung des Abstreifers (300) positioniert sind, wobei die Bürsten so eingerichtet sind, dass sie nach dem Durchgang der Rakel die Gülle, die in den Unebenheiten des Bodens festhängt, entfernen; **dadurch gekennzeichnet, dass**
der Abstreifer (300) ferner Mittel (340) zum Umlenken der von der Bürstenvorrichtung (330) abgestreiften Gülle umfasst, die so ausgelegt sind, dass sie die den Rakeln (320) vorgelagerte Gülle in der Vorwärtsbewegungsrichtung des Abstreifers (300) zurücklenken.

2. Abstreifer (300) nach Anspruch 1, **dadurch gekennzeichnet, dass** jede Bürste (331) spiralförmig ist und so eingerichtet ist, dass sie die aus den Unebenheiten des Bodens (210) entfernte Gülle in Richtung des Körpers (310) lenkt, wobei die Umlenkmittel (340) so eingerichtet sind, dass sie die von jeder Bürste (331) abgestreifte Gülle aufnehmen und sie in der Vorwärtsbewegungsrichtung des Abstreifers (300) vor den Rakeln (320) zurücklenken.

3. Abstreifer (300) nach dem vorhergehenden Anspruch, **dadurch gekennzeichnet, dass** die Umlenkmittel (340) eine Walze (341) umfassen, die dazu bestimmt ist, die von jeder Bürste (331) kommende Gülle zu sammeln, wobei die Walze so eingerichtet ist, dass sie die gesammelte Gülle durch ihre Drehgeschwindigkeit vor den Rakeln (320) auswirft.

4. Abstreifer (300) nach einem der Ansprüche 1 und 2, **dadurch gekennzeichnet, dass** die Umlenkmittel (340) in Form von Ablenkvorrichtungen (343) vorliegen, die jede der Bürsten (331) umgeben, wobei die Bürsten (331) so eingerichtet sind, dass sie die vom Boden abgestreifte Gülle in Richtung der Ablenkvorrichtungen (343) leiten.

5. Abstreifer (300) nach einem der Ansprüche 1 bis 4, **dadurch gekennzeichnet, dass** er auch Desinfektionsmittel (350) umfasst, die nach den Bürstenmitteln (330) in der Vorwärtsbewegungsrichtung des Abstreifers (300) positioniert sind.

6. Abstreifer nach dem vorhergehenden Anspruch, **dadurch gekennzeichnet, dass** die Desinfektionsmittel eine Sprührampe für eine Desinfektionslösung und/oder eine UV-Lampenrampe umfassen.

7. Tierzuchtanlage (100), die mindestens einen Gang (200) umfasst, der dazu bestimmt ist, von den Tiere durchquert zu werden, wobei der Gang einen mit Unebenheiten versehenen Boden (210) aufweist, wobei die Anlage (100) auch mindestens einen Gülleabstreifer (300) nach einem der vorhergehenden Ansprüche umfasst, der dazu bestimmt ist, den Boden (210) des Gangs (200) abzustreifen.

8. Anlage (100) nach dem vorhergehenden Anspruch, **dadurch gekennzeichnet, dass** sie Antriebsmittel zum Verschieben des Abstreifers (300) umfasst, wobei die Antriebsmittel eine motorisierte Vorrichtung und ein Verbindungselement umfassen, das die motorisierte Vorrichtung mit dem Abstreifer (300) verbindet.

## Claims

1. A manure scraper (300) for an animal breeding facility (100), the scraper (300) comprising:
- a body (310),
- a pair of scraping members (320) extending on either side of the body (310), transversely to a forward direction of travel of the scraper (300),
- a device (330) for brushing the floor (210), positioned downstream of the scraping members (320) along the forward direction of travel of the scraper (300), the brushing device (300) comprising two brushes (331) each positioned downstream of a scraping member (320) along the forward direction of travel of the scraper (300), the brushes being configured to dislodge manure trapped in asperities of the floor after passage of the scraping members;
**characterised in that**
the scraper (300) also comprises means (340) for returning the manure scraped by the brushing device (330), designed to return the manure upstream of the scraping members (320) along the forward direction of travel of the scraper (300).

2. The scraper (300) according to claim 1, **characterised in that** each brush (331) is helical and configured to direct the manure dislodged from the asperities of the floor (210) towards the body (310), the return means (340) being configured to recover the manure scraped by each brush (331) and return it upstream of the scraping members (320) along the forward direction of travel of the scraper (300).

3. The scraper (300) according to the preceding claim, **characterised in that** the return means (340) comprise a roll (341) intended to gather manure from each brush (331), the roll being configured to eject manure gathered upstream of the scraping members (320) via its rotational speed.

4. The scraper (300) according to any one of claims 1 and 2, **characterised in that** the return means (340) are in the form of deflectors (343) surrounding each of the brushes (331), the brushes (331) being configured to send the scraped manure onto the floor towards the deflectors (343).

5. The scraper (300) according to any one of claims 1 to 4, **characterised in that** it also comprises disinfection means (350) positioned downstream of the brushing means (330) along the forward direction of travel of the scraper (300).

6. The scraper according to the preceding claim, **characterised in that** the disinfection means comprise a rail for spraying a disinfectant solution and/or a rail of ultraviolet lamps.

7. An animal breeding facility (100) comprising at least one aisle (200) through which the animals are intended to pass, said aisle having a floor (210) with asperities, the facility (100) also comprising at least one manure scraper (300) according to any one of the preceding claims, intended to scrap the floor (210) of the aisle (200).

8. The facility (100) according to the preceding claim, **characterised in that** it comprises drive means for moving the scraper (300), the drive means comprising a motor drive device and a connection member connecting the motor drive device to the scraper (300).
